# EUROPÄISCHE PATENTSCHRIFT

(11) **EP 3 130 068 B1**
(45) Veröffentlichungstag und Bekanntmachung des Hinweises auf die Patenterteilung: **10.10.2018**
(21) Anmeldenummer: 15728820.0
(22) Anmeldetag: 08.06.2015
(51) Int. Cl.: H02K 19/14, H02K 55/04, H02K 17/26

(54) **ELEKTRISCHE MASCHINE FÜR HOHE DREHZAHLEN**
ELECTRIC MACHINE FOR HIGH SPEEDS
MOTEUR ELECTRIQUE POUR RÉGIMES ÉLEVÉS

(30) Priorität: 10.06.2014 DE 102014211029
(43) Veröffentlichungstag der Anmeldung: 15.02.2017
(73) Patentinhaber: Siemens Aktiengesellschaft, 80333 München (DE)
(72) Erfinder: GRUNDMANN, Jörn, 91091 Großenseebach (DE); FRANK, Michael, 91080 Uttenreuth (DE); BAUER, Anne, 90768 Fürth (DE)
(86) Internationale Anmeldenummer: PCT/EP2015/062656
(87) Internationale Veröffentlichungsnummer: WO 2015/189120

(56) Entgegenhaltungen:
- EP-A2- 2 523 322
- JP-A- H09 327 159
- US-A- 3 742 265

## Beschreibung

Die Erfindung betrifft eine elektrische Maschine mit einem Ständer und einem um eine Rotationsachse drehbar gelagerten Läufer, bei der der Läufer einen innenliegenden Läuferkern aufweist, der mit wenigstens einer elektrischen Spulenwicklung versehen ist. Insbesondere betrifft die Erfindung eine Synchronmaschine mit einem derartigen Aufbau.

Nach dem Stand der Technik weisen Synchronmaschinen einen feststehenden Ständer und einen um eine ortsfeste Achse rotierenden Läufer auf, wobei der Läufer typischerweise eine Erregerwicklung trägt, die das für den Betrieb der Maschine nötige magnetische Drehfeld erzeugt. Der Ständer ist mit einer Mehrzahl an elektrischen Spulenwicklungen versehen, die zusammen an ein ein- oder mehrphasiges Wechselspannungsnetz angeschlossen sind. Dabei läuft das Drehfeld synchron mit der Netzfrequenz. Bei einer sogenannten Innenpolmaschine ist der Läufer typischerweise als zylindrischer Körper innerhalb eines hohlzylindrischen Ständers angeordnet. Zwischen den Spulenwicklungen des Läufers und des Ständers befindet sich ein Luftspalt, der zur Erhöhung des Wirkungsgrades der Maschine und/oder um den Herstellungs- und Materialaufwand zu minimieren allgemein möglichst klein gehalten wird.

Eine solche Synchronmaschine kann prinzipiell entweder als Motor oder als Generator betrieben werden. Im Motorbetrieb wird dem Stromnetz elektrische Leistung entzogen und über die Drehung des Läufers in mechanische Leistung umgewandelt. Hierzu ist der Läufer zweckmäßig mit einer Rotorwelle verbunden, die das erzeugte Drehmoment überträgt. Solche Motoren können beispielsweise als Antriebe für Verdichter, Gebläse oder Pumpen zum Einsatz kommen. Im Generatorbetrieb wird umgekehrt mechanische Energie in elektrische Energie umgewandelt, und eine von außen induzierte Drehung der Rotorwelle erzeugt über magnetische Induktion in den Ständerspulen eine Wechselspannung.

Bei beiden Betriebsmodi wird die Erregerwicklung des Läufers von einem Gleichstrom durchflossen, der von einem äußeren Stromnetz auf die rotierende Spulenwicklung übertragen wird. Es sind Synchronmaschinen bekannt, bei denen die Erregerwicklung als supraleitende Spulenwicklung ausgeführt ist, da durch den zu vernachlässigenden Gleichstromwiderstand einer solchen Spule ein besonders hoher Wirkungsgrad und/oder ein kompakter Aufbau erzielt werden kann. Eine solche supraleitende Erregerwicklung ist beispielsweise in der US 2012 0235 532 A1 sowie in den EP 490 550 B1, EP 252 332 2 A2 und US 374 2265 A beschrieben.

Ein Problem bei der Herstellung supraleitender Erregerwicklungen stellt die mechanische Belastung der empfindlichen Supraleiter durch die hohen Zentrifugalkräfte dar. Andererseits werden für viele Anwendungen Maschinen mit sehr hohen Drehzahlen von 3000 Umdrehungen pro Minute und mehr benötigt. Zur Vermeidung von zu hohen Zentrifugalbelastungen der Supraleiter und auch anderer Komponenten ist es daher wünschenswert, solche Synchronmaschinen für besonders hohe Drehzahlen möglichst schlank, also mit möglichst geringem radialem Durchmesser, auszulegen.

Andererseits gibt es für eine elektrische Maschine mit einer vorgegebenen elektrischen Leistung immer eine Untergrenze für einen sinnvollen radialen Durchmesser, der gerade bei supraleitenden Erregerwicklungen vielfach durch den Platzbedarf der typischerweise normalleitenden Ständerwicklungen begrenzt ist. Bei einer vorgegebenen Stromdichte in diesen meist aus Kupfer ausgeführten Ständerwicklungen bestimmt der Platzbedarf für den Wicklungsquerschnitt zusammen mit dem Platzbedarf für die Haltestrukturen der Wicklungen den benötigten Platz auf dem inneren Umfang des hohlzylindrischen Ständers. Bei sogenannten Luftspaltwicklungen bestehen die Haltestrukturen aus amagnetischen Materialien, bei herkömmlichen Ständerwicklungen dagegen dienen zwischen den Wicklungen angeordnete Eisenzähne zusätzlich der Führung des magnetischen Flusses. Gerade bei hohen Leistungen müssen diese Haltestrukturen auch hohe Kräfte und Drehmomente aufnehmen können, so dass sie einen gewissen Mindestplatzbedarf auf dem inneren Umfang des Ständers aufweisen. Ein weiteres Problem bei einer starken Verkleinerung des Innendurchmessers ist durch die benötigte Kühlung der Ständerwicklungen gegeben. Wenn die durch die ohmschen Verluste und/oder Eisenverluste bewirkte Wärmeentwicklung auf sehr kleinem Raum stattfindet, werden aufwendige Kühlsysteme benötigt, die zum Teil auch ihrerseits wieder Platz auf der inneren Oberfläche des Ständers benötigen können.

Eine Verkleinerung des inneren Ständerdurchmessers gegenüber herkömmlichen Baugrößen ist auch deswegen schwierig, weil bei gleicher Leistung hierfür der pro Flächeneinheit der Ständerinnenfläche benötigte magnetische Fluss erheblich gesteigert werden müsste. Solche höheren magnetischen Flussdichten führen zu erhöhten Streufeldanteilen. Eine Reduktion der induzierten Spannung bei gleichzeitiger Erhöhung des Stroms stellt ebenfalls keine gute Lösung dar, da die Stromdichten in den Ständerwicklungen ohnehin schon begrenzt sind. Auch eine Kompensation des reduzierten Innendurchmessers durch eine axiale Verlängerung der Maschine würde sich meist nachteilig bezüglich Wirkungsgrad, Größe, Gewicht und Kosten auswirken.

Bei herkömmlichen elektrischen Maschinen gibt der Innendurchmesser des Ständers gleichzeitig auch im Wesentlichen den Außendurchmesser des Läufers vor, da der Luftspalt zwischen Ständerwicklungen und Läuferwicklungen möglichst klein gehalten werden soll, um eine hohe radiale Komponente des magnetischen Flusses am Ort der Ständerwicklungen zu erzielen. Durch die Kombination der beschriebenen Randbedingungen ist somit bei herkömmlichen elektrischen Maschinen die Drehzahl des Läufers nach oben hin begrenzt. Aus der JP H 09327159 A ist eine Induktionssynchronmaschine mit einem Hauptrotor und einem Subrotor bekannt.

Aufgabe der Erfindung ist es daher, eine elektrische Maschine anzugeben, welche die genannten Nachteile vermeidet. Insbesondere soll eine elektrische Maschine für sehr hohe Drehzahlen angegeben werden.

Diese Aufgabe wird durch die in Anspruch 1 angegebene elektrische Maschine gelöst.

Ein wesentlicher Vorteil der erfindungsgemäßen elektrischen Maschine liegt darin, dass der Innendurchmesser des Ständers deutlich größer gewählt werden kann als der Außendurchmesser des innenliegenden Läuferkerns mit der darauf angeordneten elektrischen Spulenwicklung. Die Kombination von Läuferkern und elektrischer Spulenwicklung wird im Folgenden auch als innerer Läufer bezeichnet. Hierbei ist der Läuferkern beispielsweise mit der Spulenwicklung bewickelt, oder die bereits gewickelte Spulenwicklung kann nachträglich auf dem Läuferkern aufgebracht sein. Die Spulenwicklung kann den Läuferkern wenigstens teilweise umgeben und/oder sie kann anderweitig beispielsweise in radial außenliegenden Bereichen auf dem Läuferkern angeordnet sein. Der radiale Abstand zwischen der Außenseite des inneren Läufers und der Innenseite des Ständers wird dabei zweckmäßig zu einem mehrheitlichen Teil durch den äußeren Läufermantel gefüllt, der dazu dient, das durch die elektrische Spulenwicklung des Läufers erzeugte Erregermagnetfeld zu führen. Dabei kann vorteilhaft ein möglichst kleiner Luftspalt zwischen Ständer und Läufermantel erreicht werden. Durch das Vorhandensein des Läufermantels kann im Vergleich zu herkömmlichen elektrischen Maschinen der Außendurchmesser des inneren Läufers erheblich verkleinert werden, ohne dass gleichzeitig der Innendurchmesser des Ständers auf ähnliche Werte verkleinert werden muss. Dies ermöglicht einen Betrieb der elektrischen Maschine bei höheren Drehzahlen, da die Komponenten des inneren Läufers durch dessen kleineren Durchmesser bei vergleichbarer Drehzahl geringeren Fliehkräften ausgesetzt sind. Insbesondere ist die mechanische Belastung der elektrischen Spulenwicklung des Läufers bei vergleichbaren Drehzahlen geringer. Zweckmäßig ist der Läufermantel mechanisch so fest mit dem Läuferkern verbunden, dass Läufermantel und Läuferkern synchron miteinander rotieren und die Verbindung den mechanischen Belastungen auch bei hohen Drehzahlen standhält.

Vorteilhafte Ausgestaltungen und Weiterbildungen der Erfindung gehen aus den von Anspruch 1 abhängigen Ansprüchen hervor. So kann die elektrische Maschine zusätzlich folgende Merkmale aufweisen:
Der Läufermantel kann zu mehrheitlichen Teilen seines Umfangs eine Dicke von wenigstens 1 cm aufweisen. Besonders vorteilhaft kann die Dicke wenigstens 5 cm, insbesondere sogar wenigstens 20 cm betragen. Der Vorteil dieser Ausführungsform liegt darin, dass der Außendurchmesser des inneren Läufers um wenigstens den genannten Wert der Dicke kleiner gewählt werden kann als der Innendurchmesser des Ständers. Durch eine derart starke Entkopplung der Durchmesser kann eine Maschine mit besonders kleinem Durchmesser des inneren Läufers konstruiert werden, die somit für besonders hohe Drehzahlen geeignet ist. Bei der genannten Dicke des Läufermantels geht es um die Wandstärke, die dieser Mantel auf mehrheitlichen Teilen seines Umfangs aufweist. Unabhängig von dieser Nennwandstärke kann der Läufermantel in anderen Teilbereichen eine dünnere Wandstärke aufweisen. Insbesondere kann der Läufermantel in Teilbereichen mit Ausnehmungen versehen sein und in diesen Teilbereichen entweder eine wesentlich dünnere Wandstärke aufweisen oder sogar radial durchgehende Öffnungen aufweisen.

Der Läufermantel kann die Grundform eines kreiszylindrischen Hohlkörpers aufweisen. Hierunter sollen auch solche Formen des Läufermantels verstanden werden, bei denen die hohlzylindrische Grundform an verschiedenen Stellen mit Ausnehmungen versehen ist. Der äußere Durchmesser des Hohlkörpers kann um wenigstens 10 % größer sein als der innere Durchmesser des Hohlkörpers. Besonders vorteilhaft können sich Innendurchmesser und Außendurchmesser um wenigstens 20 % unterscheiden, insbesondere können sie sich sogar um wenigstens 40 % unterscheiden. Die Vorteile dieser Ausführungsformen sind vergleichbar mit denen der oben beschriebenen Mindestwerte für die Nennwandstärke. Die Nennwandstärke ergibt sich für einen hohlzylindrischen Läufermantel als die Hälfte der Differenz von Außen- und Innendurchmesser. Zweckmäßig rotiert der insgesamt zylindrische Läufer in einem ebenfalls zylindrischen Innenraum des Ständers, dessen Durchmesser auch als Ständer-Bohrungsdurchmesser bezeichnet wird. Vorteilhaft liegt dabei nur ein möglichst geringer Spalt zwischen Läufermantel und Innenfläche des Ständers vor, so dass sich der Außendurchmesser des Läufermantels und der Innendurchmesser des Ständers nur geringfügig unterscheiden. Beispielsweise kann die Breite dieses Spalts 1 mm und 100 mm liegen.

Die elektrische Spulenwicklung des Läufers kann als supraleitende Spulenwicklung, insbesondere mit einem hochtemperatursupraleitenden Material, ausgebildet sein. Bei Maschinen mit einer solchen supraleitenden Erregerwicklung können besonders hohe Wirkungsgrade und weitere vorteilhafte Eigenschaften erzielt werden. Die Wahl einer supraleitenden Erregerwicklung in Kombination mit den genannten Merkmalen für die Durchmesser von innerem Läufer und Ständer ist besonders vorteilhaft, da Läuferwicklungen mit supraleitenden Materialien aufgrund der hohen Stromtragfähigkeit besonders gut kompakt und auf Läufern mit niedrigen Durchmessern ausgestaltet werden können. Andererseits ist es gerade bei empfindlichen supraleitenden Materialien wie keramischen Hochtemperatursupraleitern besonders wichtig, übermäßige mechanische Belastungen durch hohe Zentrifugalkräfte zu vermeiden. Elektrische Maschinen mit supraleitenden Erregerwicklung können also besonders vorteilhaft so aufgebaut werden, dass die geometrischen Anforderungen an den Innendurchmesser des Ständers und den Außendurchmesser des inneren Läufers durch einen dazwischen angeordneten, mitrotierenden weichmagnetischen Läufermantel entkoppelt sind.

Das weichmagnetische Material des Läufermantels kann eine magnetische Permeabilitätszahl von wenigstens 30, insbesondere wenigstens 300 aufweisen. Insbesondere kann das weichmagnetische Material Eisen, Kobalt und/oder Nickel sowie Legierungen mit den genannten Metallen umfassen. Dieses weichmagnetische Material des Läufermantels dient dazu, das von der Erregerspule im Bereich des Ständers erzeugte Magnetfeld zu verstärken. Insbesondere soll in dem durch das weichmagnetische Material zu großen Teilen aufgefüllten Zwischenraum zwischen innerem Läufer und Ständer ein magnetischer Fluss mit einer möglichst hohen radialen Komponente erzeugt werden. Der Füllgrad des radialen Zwischenraums kann dazu vorteilhaft zwischen 50 % und 99 %, besonders vorteilhaft zwischen 70 % und 95 % betragen.

Der Läufermantel ist mit wenigstens einem Paar von diametral gegenüberliegenden Ausnehmungen versehen. Insbesondere können solche Ausnehmungen als Ausnehmungen im weichmagnetischen Material des Läufermantels vorliegen. Der Vorteil einer solchen Ausführungsform ist, dass der Anteil des magnetischen Flusses, der als magnetischer Kurzschluss zwischen den Polen des Erregermagnetfeldes im Material des Läufermantels verlorengeht, möglichst klein gehalten wird. Die genannten Ausnehmungen bewirken, dass der im Material des Läufermantels induzierte magnetische Fluss eine besonders hohe radiale Komponente aufweist und dass somit auch ein möglichst hoher magnetischer Fluss zum Ort des Ständers geleitet wird. Dabei sind die genannten Paare von diametral gegenüberliegenden Ausnehmungen besonders geeignet, um die zwischen den magnetischen Polen möglichen Kurzschlusspfade auch paarweise und damit möglichst symmetrisch einzuschränken. Vorteilhaft entsteht dadurch im Luftspalt und/oder am Ort des Ständers ein über dem Umfang betrachtet annähernd sinusförmiger Feldverlauf.

Die genannten Ausnehmungen können als Ausnehmungen im weichmagnetischen Material des Läufermantels gebildet sein, wobei die Ausnehmungen zumindest teilweise mit amagnetischem Material aufgefüllt sein können. Besonders vorteilhaft können die Ausnehmungen auch im Wesentlichen ganz mit amagnetischem Material gefüllt sein. Unter amagnetischen Materialien sollen hier alle Materialien verstanden werden, die nicht ferromagnetisch oder ferrimagnetisch sind. Auch Legierungen oder andere Stoffgemische mit Permeabilitätszahlen µᵣ unterhalb von 30 sollen hierbei als amagnetisch gelten. Besonders vorteilhaft können amagnetische Materialien mit Permeabilitätszahlen unterhalb von 10 zum Einsatz kommen. Insbesondere kann auch Luft als amagnetische Füllung für die Ausnehmungen dienen, durch die ein magnetischer Kurzschluss zwischen den Polen des Erregerfeldes verhindert oder verringert werden kann. Besonders vorteilhaft sind die Ausnehmungen jedoch zumindest teilweise mit einem Feststoff gefüllt, so dass der mit dem Läufer schnell rotierende Läufermantel an diesen Stellen in seiner mechanischen Festigkeit verstärkt wird. Geeignete Materialien für feste amagnetische Füllungen sind beispielsweise amagnetische Legierungen, insbesondere amagnetischer Stahl, glasfaserverstärkter Kunststoff, kohlefaserverstärkter Kunststoff sowie Titan und dessen Legierungen.

Der Läufermantel kann mit wenigstens zwei diametral gegenüberliegenden Anordnungen von jeweils mehreren in axialer Richtung beabstandeten Ausnehmungen versehen sein. Insbesondere können zwei oder mehr solcher Anordnungen vorliegen, die jeweils als regelmäßiges Raster oder auch unregelmäßiges Raster von einzelnen Ausnehmungen ausgebildet sind. Zwischen diesen einzelnen Ausnehmungen kann stellenweise die volle Nennwandstärke des Läufermantels vorliegen, was beispielsweise zu einer höheren mechanischen Stabilität des sich schnell mitdrehenden Läufermantels führen kann.

Der Läufermantel kann mit wenigstens zwei diametral gegenüberliegenden, jeweils radial durchgehenden Unterbrechungen versehen sein. Dies kann vorteilhaft bewirken, dass magnetische Kurzschlusspfade zwischen den Polen abgeschwächt werden können. Solche radial durchgehenden Ausnehmungen im weichmagnetischen Material können besonders vorteilhaft mit amagnetischem Material gefüllt sein, um die mechanische Festigkeit des Läufermantels zu gewährleisten. Alternativ oder zusätzlich können die Ausnehmungen als in axialer Richtung beabstandete Anordnungen mehrerer einzelner Ausnehmungen vorliegen, zwischen denen zumindest ein Teil der Wandstärke des Läufermantels erhalten ist. Auch die weiteren beschriebenen vorteilhaften Merkmale der Ausnehmungen des Läufermantels können auf verschiedene Weisen miteinander kombiniert werden.

Die Spulenwicklung zur Erzeugung des Magnetfeldes ist mit einer Polpaarzahl n ausgebildet sein, wobei der Läufermantel wenigstens n Paare von jeweils diametral gegenüberliegenden Ausnehmungen aufweist, und wobei diese Ausnehmungen in Umlaufrichtung jeweils zwischen zwei benachbart liegenden Polen angeordnet sind. Vor allem bei Generatoren sind zweipolige Maschinen weit verbreitet. Bei einer entsprechenden Polpaarzahl von eins kann der Läufermantel dann demnach vorteilhaft wenigstens ein Paar von diametral gegenüberliegenden Ausnehmungen aufweisen, die in Umlaufrichtung zwischen den dann ebenfalls gegenüberliegenden Polen angeordnet sind. Besonders vorteilhaft können die Ausnehmungen im Wesentlichen mittig zwischen den jeweils benachbart liegenden Polen liegen, bei einer zweipoligen Maschine also äquatorial zwischen den Polen. Bei elektrischen Maschinen mit einer höheren Polpaarzahl von zwei oder mehr können dann entsprechend höhere Zahlen von Ausnehmungspaaren vorgesehen sein, wobei Ausnehmungen und Pole vorteilhaft so in Umfangsrichtung verteilt sind, dass zwischen jeweils zwei benachbart liegenden Polen immer wenigstens eine solche Ausnehmung angeordnet ist. Insbesondere können die Ausnehmungen jeweils in etwa mittig zwischen zwei in Umlaufrichtung benachbarten Polen angeordnet sein. Die mittige Anordnung zwischen benachbarten Polen ist besonders geeignet, die direkten magnetischen Kurzschlusspfade zwischen den magnetischen Polen zu schwächen und die radialen Komponenten des magnetischen Flusses im Material des Läufermantels zu erhöhen. Es sind hier wiederum alle Kombinationen mit den oben beschriebenen Ausgestaltungen der Ausnehmungen möglich. Insbesondere kann an jeder Position in Umlaufrichtung auch eine Reihe von mehreren Ausnehmungen angeordnet sein, die untereinander axial beabstandet sind.

Zwischen dem Läuferkern mit der elektrischen Spulenwicklung und dem Läufermantel kann ein innerer Spalt angeordnet sein. Mit anderen Worten kann zwischen dem inneren Läufer und dem Läufermantel ein innerer Spalt angeordnet sein. Dieser innere Spalt kann zweckmäßig sein, um die Montage des inneren Läufers im Läufermantel zu vereinfachen. Ähnlich wie beim äußeren Luftspalt zwischen Läufermantel und Ständer ist es zweckmäßig, einen solchen inneren Spalt möglichst gering zu halten, beispielsweise zwischen 0,1 mm und 50 mm, insbesondere zwischen 1 mm und 10 mm. Der innere Spalt kann ein Luftspalt sein. Alternativ kann der innere Spalt aber auch evakuiert sein. Im inneren Spalt können weiterhin Stützstrukturen angebracht sein, um insbesondere bei axial ausgedehnten Läufern ein Durchbiegen und/oder Unwuchten zu minimieren.

Der Läufermantel kann den Läuferkern mit der elektrischen Spulenwicklung vakuumdicht umschließen. Diese Konfiguration ist besonders zweckmäßig, wenn die Erregerwicklung eine supraleitende Spulenwicklung ist, die auf kryogene Temperaturen gekühlt werden muss, und wenn gleichzeitig der Läufermantel beim Betrieb der Maschine eine wesentlich höhere Temperatur vom beispielsweise Raumtemperatur oder mehr aufweist. Bei Vorliegen eines inneren Spalts zwischen Läufermantel und innerem Läufer kann der Läufermantel dazu dienen, diesen inneren Spalt evakuiert zu halten, damit der innere Läufer möglichst gut vom Läufermantel thermisch isoliert ist. Dann kann beispielsweise der ganze innere Läufer auf eine Temperatur in der Nähe der Betriebstemperatur des Supraleiters gekühlt werden, und der Läufermantel kann beim Betrieb auf einer wesentlich wärmeren Temperatur gehalten werden. Die mechanische Verbindung zwischen innerem Läufer und Läufermantel ist dann zweckmäßig aus thermisch schlecht leitfähigen Materialien ausgestaltet, um eine solche Temperaturdifferenz aufrechtzuerhalten. Allgemein kann die mechanische Verbindung zwischen Läufermantel und Läuferkern an den beiden axialen Endbereichen des Läufers geschaffen werden. Alternativ oder zusätzlich können jedoch auch weitere Verbindungen in axial weiter innenliegenden Bereichen vorliegen. Für solche thermisch schlecht leitfähigen Verbindungen können vorteilhaft glasfaserverstärkte Kunststoffe oder andere Materialien mit einer thermischen Leitfähigkeit von höchstens 2 W/mK und/oder einem Wärmeleitintegral von höchsten 20 W/cm eingesetzt werden. Diese vorteilhaften Grenzwerte für die Wärmeleitfähigkeit sollen sich insbesondere auf bei Raumtemperatur gemessene Werte beziehen.

Zwischen dem Läuferkern mit der elektrischen Spulenwicklung und dem Läufermantel kann ein innerer Vakuumbehälter angeordnet sein, der den Läuferkern mit der elektrischen Spulenwicklung vakuumdicht umschließt. Bei dieser Konfiguration ist also eine zusätzliche vakuumdichte Wand im inneren Spalt zwischen Läufermantel und innerem Läufer angeordnet. Zumindest der Teil des inneren Spalts, der zwischen Vakuumbehälter und innerem Läufer liegt, ist dann während des Betriebs evakuiert, so dass ein hohes Temperaturgefälle zwischen dem kalten inneren Läufer und dem warmen Läufermantel aufrechterhalten werden kann. Diese Ausführungsform ist dann zweckmäßig, wenn das weichmagnetische Material des Läufermantels nicht ausreichend vakuumdicht ist, um gleichzeitig die Funktion eines Vakuumgefäßes zu erfüllen. Auch bei der Ausführungsform mit zusätzlichem Vakuumgefäß im inneren Spalt ist es zweckmäßig, wenn zumindest innerer Läufer und Vakuumgefäß in den axialen Endbereichen durch thermisch schlecht leitfähige Materialien miteinander verbunden sind.

Alternativ oder zusätzlich kann der Läufermantel von einem äußeren Vakuumbehälter umschlossen sein. Bei dieser Konfiguration wird zweckmäßig auch der Läufermantel auf eine Temperatur in der Nähe der Betriebstemperatur des Supraleiters gekühlt, und der wesentliche Temperaturgradient liegt zwischen Läufermantel und dessen Vakuumbehälter vor. Dieser Vakuumbehälter kann beispielsweise mit den übrigen Teilen des Läufers rotieren. In diesem Fall sollte der äußere Vakuumbehälter mit thermisch schlecht leitenden Materialien mit den übrigen Teilen des Läufers verbunden sein. Alternativ kann der Vakuumbehälter starr im Innenraum des Ständers angeordnet sein, wobei eine Rotation des Läufers im letzteren Fall durch vakuumdichte Drehdichtungen im Vakuumbehälter für die Läuferwelle ermöglicht wird. In dieser Ausführungsform muss die mechanische Fixierung des Läufermantels auf dem inneren Läufer nicht zwangsläufig mit thermisch schlecht leitenden Materialien erfolgen. Der Vakuumbehälter kann vorteilhaft aus einem elektrisch schlecht leitfähigen Material ausgebildet sein, beispielsweise aus glasfaserverstärktem Kunststoff.

Bei einer solchen Konfiguration, bei der auch der Läufermantel im Betrieb der Maschine bei tiefkalten Temperaturen vorliegt, sollte der Läufermantel aus kaltzähen Materialien gebildet sein. Beispielsweise kann als weichmagnetisches Material des Läufermantels der Stahl X8Ni9 gewählt werden.

Die vorab beschriebenen Ausführungsformen für die thermische Isolierung sind so ausgebildet, dass der gesamte innere Läufer einschließlich des Läuferkerns auf einem kalten Temperaturniveau gehalten wird. Für herkömmliche elektrische Maschinen mit supraleitenden Erregerwicklungen ist eine ähnliche thermische Konfiguration aus der DE10300269A1 bekannt, bei der der gesamte Läufer von einer unmagnetischen Vakuumhülle umgeben ist. Zur Lagerung des gekühlten Läufers in der warmen Umgebung der elektrischen Maschine können allgemein thermisch schlecht leitende Stütz- und Drehmomentübertragungselemente zum Einsatz kommen, wie in der DE10110674A1 beschrieben. Die Kühlung des inneren Läufers kann bei derartigen Ausführungsformen auf besonders vorteilhafte Weile über die Zirkulation eines Kühlmittels innerhalb der Rotorwelle nach dem Thermosiphonprinzip erfolgen.

Alternativ zu einer derartigen thermischen Konfiguration kann der Läuferkern auch auf einem warmen Temperaturniveau vorliegen, und die supraleitenden Erregerwicklungen können durch thermisch schlecht leitende Stützelemente auf dem warmen Läuferkern abgestützt werden, so dass sich das hauptsächliche Temperaturgefällt zwischen elektrischer Spulenwicklung und Läuferkern ausbildet. Derartige Typen von Stützelementen sind beispielsweise in der EP690550B1 und der US20120235532 beschrieben.

Auch bei einem nach der vorliegenden Erfindung ausgestalteten Läufer kann die elektrische Spulenwicklung mit wenigstens einer derartigen oder ähnlichen Halteschlaufe aus einem thermisch schlecht leitenden Material gegen den Läuferkern abgestützt sein. Eine solche Konfiguration hat den Vorteil, dass der Läuferkern auf einem warmen Temperaturniveau vorliegt und somit nicht gegen den Läufermantel thermisch isoliert werden muss. Die mechanische Verbindung zwischen Läuferkern und Läufermantel kann also ohne Rücksicht auf thermisch isolierende Eigenschaften ausgestaltet werden. Gerade bei sehr hohen Drehzahlen kann dies vorteilhaft sein, da die mechanische Verbindung zwischen Läuferkern und Läufermantel dann sehr hohen Belastungen standhalten muss. In diesem Fall muss dann insgesamt eine möglichst gute thermische Isolation zwischen Spulenwicklung und Läuferkern geschaffen werden, was auf ähnliche Weise erreicht werden kann, wie im Stand der Technik beschrieben. Vorteilhaft kann die wenigstens eine elektrische Spulenwicklung durch Schlaufen aus thermisch schlecht leitfähigem Material, beispielsweise Schlaufen aus glasfaserverstärktem Kunststoff gehalten werden. Die elektrische Spulenwicklung kann auf dem Läuferkern in einem evakuierten und thermisch abgeschlossenen Bereich angeordnet sein.

Der aus weichmagnetischem Material bestehende Teil des Läufermantels kann vorteilhaft als Massivkörper ausgebildet sein. Dies ermöglicht eine einfache Herstellung des Läufermantels bei gleichzeitig hoher mechanischer Festigkeit. Außerdem kann ein solcher Massivkörper gleichzeitig als Vakuumgefäß dienen. Aus diesem Massivkörper können dann die benötigten Ausnehmungen herausgearbeitet werden, die gegebenenfalls mit amagnetischem Material gefüllt werden können.

Alternativ kann der Läufermantel auch aus einem axial geschichteten Stapel von Blechen aus weichmagnetischem Material gebildet werden. Bei dieser Ausführungsform können bereits die einzelnen Bleche mit Ausnehmungen versehen werden, die geeignet sind, den magnetischen Kurzschluss zwischen den Polen der Erregerwicklung zu unterbrechen oder zu schwächen. Bei einer Ausführungsform mit einem solchen Blechstapel können auf einfache Weise auch komplexere Formen von Ausnehmungen und Anordnungen mit einer Vielzahl einzelner Ausnehmungen geschaffen werden. Insbesondere können dabei auch solche Ausnehmungen geschaffen werden, die im Inneren des Läufermantels eingebettet sind und keine Verbindung zu einer Außenfläche des Läufermantels aufweisen.

Zweckmäßig weist der Ständer der elektrischen Maschine eine Mehrzahl von Spulenwicklungen auf, die beispielsweise aus ohmsch leitenden Materialen gebildet sein können. Alternativ können auch die Wicklungen des Ständers als supraleitende Wicklungen ausgebildet sein. Unabhängig von der Art des verwendeten Leiters können die Ständerwicklungen entweder als herkömmliche Wicklungen, typischerweise auf Eisenzähnen, aufgebracht sein, oder sie können als Luftspaltwicklungen ausgebildet sein. Solche Luftspaltwicklungen sitzen auch auf Haltestrukturen des Ständers, die aber dann aus amagnetischen Materialien gebildet sind.

Die Erfindung wird nachfolgend anhand einiger bevorzugter Ausführungsbeispiele unter Bezugnahme auf die angehängten Zeichnungen beschrieben, von denen:
- Fig. 1: einen schematischen Querschnitt einer elektrischen Maschine nach einem ersten Ausführungsbeispiel zeigt,
- Fig. 2: einen schematischen Querschnitt eines Läufermantels nach einem zweiten Ausführungsbeispiel zeigt,
- Fig. 3: einen schematischen Querschnitt eines Läufermantels nach einem dritten Ausführungsbeispiel zeigt,
- Fig. 4: einen schematischen Längsschnitt eines Läufermantels nach einem vierten Ausführungsbeispiel zeigt,
- Fig. 5: einen schematischen Längsschnitt einer elektrischen Maschine nach einem fünften Ausführungsbeispiel zeigt und
- Fig. 6: einen schematischen Längsschnitt einer elektrischen Maschine nach einem sechsten Ausführungsbeispiel zeigt.

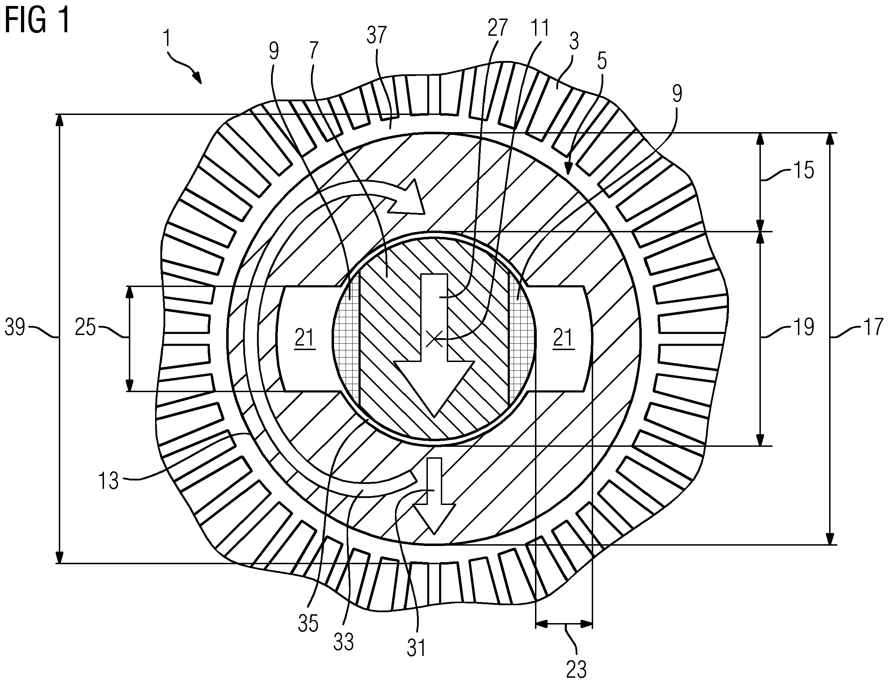

Fig. 1 zeigt einen schematischen Querschnitt einer elektrischen Maschine 1 nach einem ersten Ausführungsbeispiel der Erfindung. Gezeigt ist ein Ausschnitt eines hohlzylindrisch ausgebildeten Ständers 3 mit einem Bohrungsdurchmesser 39, in dessen Hohlraum ein Läufer 5 angeordnet ist. Der Läufer weist einen inneren Läuferkern 7 auf, auf dem eine Anordnung aus in diesem Beispiel mehreren gestapelten elektrischen Spulenwicklungen 9 befestigt ist. Diese elektrischen Spulenwicklungen 9 bilden die Erregerwicklung der elektrischen Maschine 1 und sind im betrachteten Ausführungsbeispiel als supraleitende Spulenwicklungen, hier basierend auf einem keramischen Hochtemperatursupraleiter, ausgeführt. Sie dienen in diesem Beispiel zur Ausbildung eines zweipoligen Magnetfeldes, dessen Verlauf innerhalb des Läuferkerns mit dem Pfeil 11 symbolisiert ist. Die beiden Pole des Magnetfeldes liegen dabei im oberen und unteren Bereich des in Fig. 1 abgebildeten Läuferkerns 7. Der Läuferkern 7 mit den darauf angeordneten supraleitenden Spulenwicklungen 9 bildet dabei den insgesamt zylinderförmigen inneren Läufer aus. Dieser innere Läufer ist von einem Läufermantel 13 umgeben, der eine hohlzylindrische Grundform aufweist. Innerhalb der zwischen den beiden Polen liegenden Ebene - die mittig und horizontal durch die Abbildung der Fig. verläuft - weist der Hohlkörper des Läufermantels 13 zwei diametral gegenüberliegende Ausnehmungen 21 auf, die sich in diesem Beispiel als Nuten auch in axialer Richtung über die Länge des Läufermantels 13 erstrecken. Im gezeigten ersten Ausführungsbeispiel sind die Nuten offen und nicht mit einem anderen Festkörper gefüllt.

Zwischen dem inneren Läufer und dem Läufermantel 13 ist im gezeigten Beispiel ein schmaler innerer Spalt 35 angeordnet, der die Montage des inneren Läufers im Läufermantel 13 erleichtert. Dieser Spalt ist nur 1 mm breit, so dass der Läufermantel sehr eng um den inneren Läufer geführt ist. An seinen beiden axialen Endseiten ist er mechanisch mit dem inneren Läufer verbunden, so dass er synchron mit diesem im Innenraum des Ständers 3 um die zentrale Rotationsachse 11 rotiert. Zwischen dem Läufermantel 13 und dem Ständer 3 befindet sich ein äußerer Spalt 37, der in diesem Beispiel mit Luft gefüllt ist.

Der Läufermantel 13 ist aus einem weichmagnetischen Material, in diesem Beispiel aus einer magnetischen Eisenlegierung gebildet. Er dient der Führung des von der Erregerwicklung 9 erzeugten zweipoligen Magnetfeldes. Die in Fig. 1 mit dem Pfeil 31 bezeichnete radiale Flusskomponente wird durch die hohe Permeabilität des Mantelmaterials verstärkt. Diese radiale Komponente 31 wird im Bereich des Luftspalts 37 auch als Nutzfluss bezeichnet. Am Ort des Ständers 3 setzt sich diese radiale Komponente 31 fort und tritt dort in elektromagnetische Wechselwirkung mit auf dem Ständer 3 angeordneten weiteren elektrischen Spulenwicklungen. Auch im oberen Teil der Fig. 1 ergibt sich dabei eine zu Pfeil 31 analoge und gleichgerichtete Flusskomponente, die hier der Übersichtlichkeit halber nicht gezeigt ist.

Für die Funktionsweise der elektrischen Maschine ist es vorteilhaft, eine möglichst hohe radiale Komponente 31 des magnetischen Flusses zu erzeugen. Ungünstig ist es dabei, wenn sich im Material des Läufermantels 13 ein magnetischer Kurzschlusspfad 33 ausbilden kann. Um diesen Kurzschlussanteil 33 möglichst zu reduzieren ist daher der Läufermantel im äquatorialen Bereich zwischen den beiden Polen mit den beiden gegenüberliegenden Ausnehmungen 21 versehen, die als amagnetische Unterbrechungen wirken. Die Tiefe 23 der Ausnehmungen beträgt vorteilhaft mehr als die Hälfte der Nenndicke 15 des Läufermantels, so dass der Kurzschlussanteil 33 des magnetischen Flusses tatsächlich signifikant reduziert wird. Die Breite 25 der Ausnehmungen ist im gezeigten Beispiel größer als die radiale Tiefe 23. Bei einer zweipoligen Maschine entspricht die Breite 25 der Ausnehmungen vorteilhaft in etwa der Höhe der Spulenwicklungen.

Die Abmessungen des inneren Läufers und des Läufermantels 13 können je nach Dimensionierung der elektrischen Maschine sehr unterschiedliche Größen aufweisen. Wesentlich ist, dass die Dicke 15 des Läufermantels 13 so groß ist, dass der Außendurchmesser des inneren Läufers wesentlich kleiner gewählt werden kann als der Innendurchmesser 39 des Ständers. Hierzu müssen sich Außendurchmesser 17 und Innendurchmesser 19 des Läufermantels deutlich unterscheiden, beispielsweise können sie sich vorteilhaft um wenigstens 20 % unterscheiden. Im gezeigten Beispiel mit einem inneren Spalt 35 zwischen innerem Läufer und Läufermantel ist der Außendurchmesser des inneren Läufers als Differenz zwischen Innendurchmesser des Läufermantels und der zweifachen Spaltbreite gegeben.

Geeignete Werte für die Dicke 15 des Läufermantels 13 liegen beispielsweise oberhalb von 5 cm Hierdurch kann der Außendurchmesser des inneren Läufers um etwa das Doppelte dieser Dicke 15 reduziert werden, was zu einer deutlichen Verringerung der Zentrifugalkräfte im Bereich der elektrischen Spulenwicklungen 9 führt. Durch die vom Innendurchmesser 39 des Ständers 3 entkoppelte Verkleinerung des inneren Läufers können somit höhere Drehzahlbereiche für die elektrische Maschine 1 zugänglich gemacht werden. Dabei dient das weichmagnetische Material des Läufermantels 13 und die Ausführung mit äquatorialen Ausnehmungen 21 dazu, am Ort des Ständers trotz dieser Entkopplung ein starkes Erregermagnetfeld zu erzeugen.

Im ersten Ausführungsbeispiel der Fig. 1 ist der Läufermantel 13 aus einem zylindrischen massiven Metallkörper mit vakuumdichten Wänden ausgebildet. Dieser Läufermantel 13 ist an den beiden axialen Endseiten des Läufers 5 mit hier nicht gezeigten ebenfalls vakuumdichten Seitenteilen verbunden, so dass die Ausnehmungen 21 und der innere Spalt 35 evakuiert sind. Hierdurch kann der gesamte innere Läufer auf einer sehr kalten Temperatur nahe der Betriebstemperatur der supraleitenden Spulenwicklungen 9 gehalten werden, während sich der Läufermantel 13 und der ihn umgebende Ständer 3 auf einer warmen Umgebungstemperatur befinden. Wenn der innere Spalt 35 wie hier der thermischen Isolierung dient, kann er vorteilhaft etwas breiter ausgeführt werden, als wenn er in anderen Ausführungsformen nur der vereinfachten Montage des Läufermantels 13 auf dem inneren Läufer dient. Die mechanisch starre Verbindung zwischen warmem Läufermantel 13 und gekühltem inneren Läufer kann dann zweckmäßig aus thermisch schlecht leitenden Materialien ausgeführt werden.

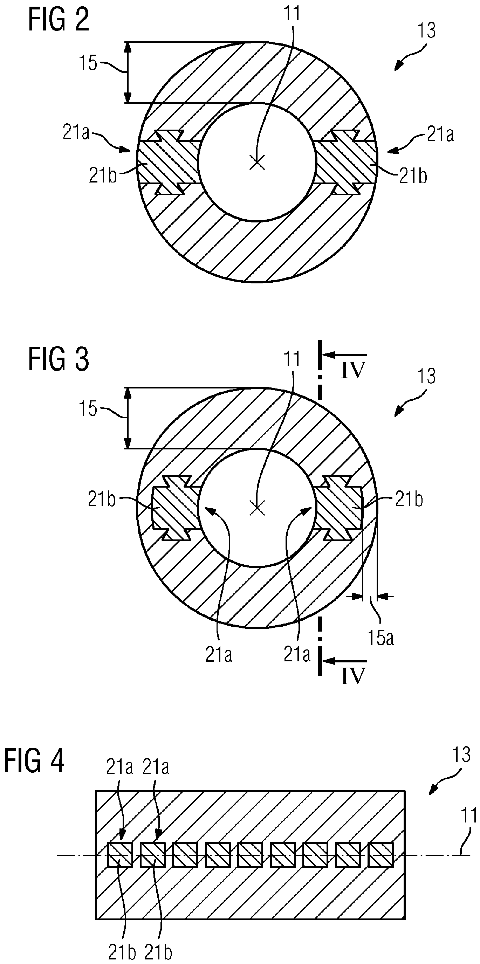

Fig. 2 zeigt einen schematischen Querschnitt eines Läufermantels 13 nach einem zweiten Ausführungsbeispiel der Erfindung. Dieser Läufermantel 13 kann analog zum Läufermantel 13 des ersten Ausführungsbeispiels in einer elektrischen Maschine eingesetzt werden. Auch hier sind zwei gegenüberliegende äquatorialen Ausnehmungen 21a im weichmagnetischen Material des Läufermantels 13 gebildet, die jedoch in diesem Beispiel als radial durchgehende Unterbrechungen 21a ausgestaltet sind. Die Unterbrechungen 21a sind hier jeweils mit einer Füllung 21b aus amagnetischem Material aufgefüllt, so dass sich insgesamt aus den beiden gegenüberliegenden Segmenten des weichmagnetischen Materials und den beiden dazwischen angeordneten Füllstücken ein geschlossener hohlzylindrischer Körper 13 ergibt. Die Unterbrechungen 21a und die darin angeordneten Füllungen 21b erstrecken sich dabei axial über die volle Länge des Läufermantels 13. Durch eine solche Konfiguration mit radial und axial durchgehenden, aber gefüllten Ausnehmungen kann der magnetische Kurzschlussanteil 33 im Läufermantel 13 besonders stark unterdrückt werden, ohne dass die mechanische Festigkeit des Läufermantels wesentlich beeinträchtigt wird. Zur vereinfachten Montage des Läufermantels 13 weisen sowohl die Füllstücke 21b als auch die Unterbrechungen 21a beispielsweise zueinander passende schwalbenschwanzartige Querschnittsprofile auf, so dass die benachbarten Segmente in axialer Richtung ineinander gesteckt werden können. Anschließend können die Füllstücke 21b mit den übrigen Segmenten des Läufermantels 13 mechanisch verbunden werden, beispielsweise durch Fassringe, stirnseitige Verschraubungen und/oder durchgehende Druckstanden mit stirnseitigen Verbindungsringen. Das amagnetische Material der Füllkörper 21b kann beispielsweise ein amagnetischer Stahl sein. Auch der in Fig. 2 gezeigte Läufermantel 13 kann in seinen axialen Endbereichen durch Verbindungsstücke mechanisch fest mit einem in seinem Inneren angeordneten inneren Läufer verbunden werden.

Fig. 3 zeigt einen schematischen Querschnitt eines Läufermantels nach einem dritten Ausführungsbeispiel der Erfindung. Auch hier sind zwei diametral gegenüberliegende Ausnehmungen 21a vorhanden, die jeweils mit einer Füllung 21b aus amagnetischem Material gefüllt sind. Die Ausnehmungen 21a erstrecken sich jedoch nicht über die ganze radiale Dicke 15, sondern es verbleibt im außenliegenden Bereich eine Restdicke 15a, die klein gegenüber der Nenndicke 15 des Läufermantels ist. Vorteilhaft liegt diese Restdicke 15a bei nur 5 % bis 50 % der Nenndicke 15. Auch in diesem Beispiel sind die Ausnehmungen 21a axial vollständig durchgehende Nuten, in die die Füllstücke 21b eingeschoben werden können. Auch hier ermöglicht eine Ausgestaltung mit Schwalbenschwanzprofil eine leichte Montage bei gleichzeitig hoher mechanischer Festigkeit. Abhängig von der verbleibenden Restdicke 15a kann auch bei diesem Ausführungsbeispiel der magnetische Kurzschlussanteil 33 relativ weitgehend minimiert werden. Dabei ist der Kurzschlussanteil 33 umso kleiner, je kleiner die verbleibende Restdicke 15a ist. Ein Vorteil dieser Konfiguration gegenüber dem in Fig. 2 gezeigten zweiten Ausführungsbeispiel liegt in der größeren mechanischen Festigkeit, da der weichmagnetische Teil der Läufermantels 13 aus einem durchgehenden Bauteil besteht. Außerdem kann bei dieser Ausführungsform, ähnlich wie bei der in Fig. 1 gezeigten ungefüllten Variante, der Läufermantel 13 gleichzeitig gut als vakuumdichte Hülle zur thermischen Isolation für einen gekühlten inneren Läufer dienen, im Unterschied zum Ausführungsbeispiel nach Fig. 2, bei dem dies nur mit erhöhtem Aufwand zum Abdichten der einzelnen Komponenten des Läufermantels 13 möglich wäre.

Fig. 4 zeigt einen schematischen Längsschnitt eines Läufermantels 13 nach einem vierten Ausführungsbeispiel der Erfindung. Die Lage des Schnitts entspricht dabei der in Fig. 3 mit IV gekennzeichneten Schnittebene. Die Ausnehmungen 21a können jedoch verschiedene Querschnittsformen haben und müssen nicht den in Fig. 3 gezeigten Querschnitt aufweisen. Insbesondere können die einzelnen Ausnehmungen 21a entweder als radial durchgehende Unterbrechungen oder auch als Vertiefungen mit verbleibender Restdicke 15a des Läufermantels ausgebildet sein. Die Restdicke 15a des Läufermantels 13 kann hierbei entweder auf der Innenseite oder auf der Außenseite des Läufermantels 13 stehenbleiben oder auf mehrere radiale Abschnitte verteilt sein. Wesentlich für das vierte Ausführungsbeispiel ist, dass auf jeder Seite des Läufermantels 13 eine Anordnung von einer Mehrzahl einzelner Ausnehmungen vorliegt, die voneinander axial beabstandet sind. Zur Unterbrechung des magnetischen Kurzschlussanteils 33 liegen dabei wieder zwei solcher diametral gegenüber angeordneten Sätze von Ausnehmungen 21a vor. In der in Fig. 4 gezeigten Variante sind die Ausnehmungen 21a mit Füllstücken versehen. Alternativ dazu können die Ausnehmungen 21a auch als offene, beispielsweise luftgefüllte oder zusammen mit der Umgebung evakuierte Hohlräume vorliegen. Eine solche Anordnung mit mehreren axial voneinander beabstandeten Ausnehmungen kann besonders vorteilhaft bei einem Läufermantel 13 vorgesehen werden, der aus einem axial geschichteten Stapel von einer Vielzahl weichmagnetischer Bleche gebildet ist. Dann kann ein Teil der Bleche mit entsprechenden Hohlräumen versehen werden, die zusammen dann die Ausnehmungen 21a des Blechstapels bilden. Auf ähnliche Weise können auch axial durchgehenden Ausnehmungen 21a in einem solchen Blechstapel gebildet werden.

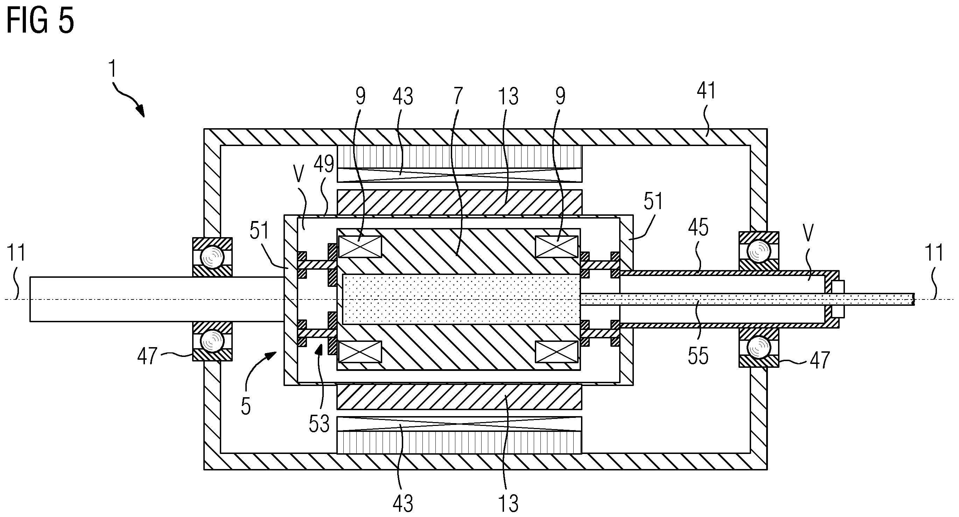

Fig. 5 zeigt einen zentralen schematischen Längsschnitt einer elektrischen Maschine nach einem fünften Ausführungsbeispiel der Erfindung. Gezeigt ist ein ortsfestes Ständeraußengehäuse 41, in dem die Ständerwicklungen 43 auf der Innenseite eines Hohlzylinders angeordnet sind. Innerhalb dieses Ständers befindet sich ein auf einer Rotorwelle 45 mit Lagern 47 drehbar gelagerter Läufer 5. Der Läufer 5 umfasst einen weichmagnetischen Läuferkern 7, auf dem supraleitende Spulenwicklungen 9 als Erregerwicklungen der Maschine angeordnet sind. Der aus Läuferkern 7 und Spulenwicklungen 9 gebildete innere Läufer ist in einem inneren Vakuumbehälter 49 angeordnet, in dem beim Betrieb der Maschine ein Vakuum V vorliegt. Dieses Vakuum V dient der thermischen Isolation des insgesamt auf einem kryogenen Temperaturniveau gehaltenen inneren Läufers von seiner warmen Umgebung. Der innere Läufer ist mit thermisch schlecht leitenden Verbindungselementen 53 mechanisch mit der Rotorwelle 45 verbunden, so dass auch über diese Verbindungen ein hoher Temperaturgradient aufrechterhalten werden kann. Die Rotorwelle 45 ist über Seitenelemente 51 mechanisch fest mit dem inneren Vakuumbehälter 49 verbunden, so dass dieser Vakuumbehälter synchron mit der Rotorwelle 45 und dem inneren Läufer rotiert. Auf der Außenseite des Vakuumbehälters 49 ist nun der Läufermantel 13 angeordnet, dessen weichmagnetisches Material das Magnetfeld der Erregerwicklungen 9 zum Ort der Ständerwicklungen 43 führt. Durch die feste Verbindung mit dem Vakuumbehälter 49 rotiert auch der Läufermantel 13 synchron mit den übrigen Bestandteilen des Läufers 5. Auch hier ist der Läufermantel 13 ähnlich wie vorab beschrieben mit Ausnehmungen 21 versehen, die zwischen den Polen der Erregerwicklung angeordnet sind. Im gezeigten fünften Ausführungsbeispiel wird der innere Läufer durch ein im Innenraum der Rotorwelle 45 zirkulierendes Kühlmittel 55 gekühlt. Es wird also der gesamte innere Läufer mit den supraleitenden Spulenwicklungen 9 und dem Läuferkern 7 auf eine Temperatur nahe der Betriebstemperatur des Supraleiters gekühlt. Der Läufermantel 13 dagegen befindet sich außerhalb des thermisch isolierenden Vakuumbehälters 49 und wird daher auf einem deutlich höheren Temperaturniveau nahe der warmen Umgebungstemperatur gehalten.

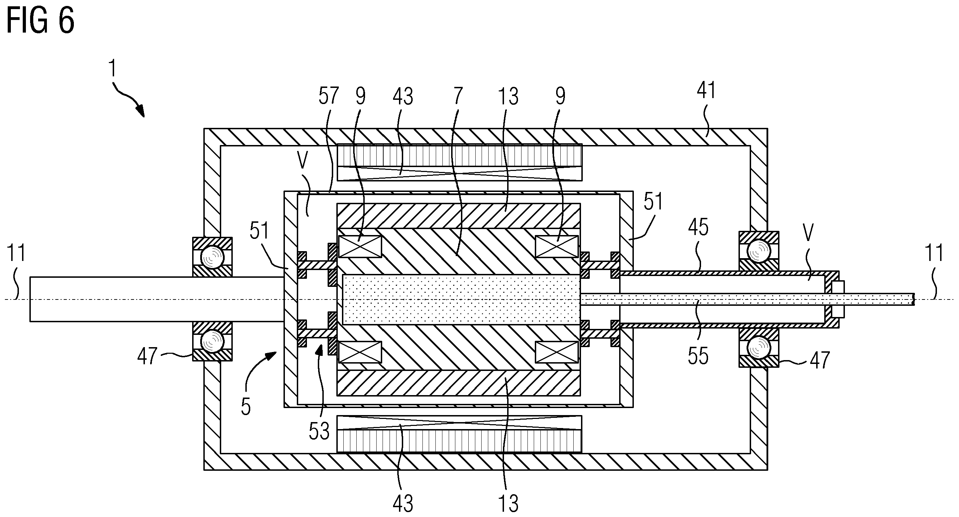

Ein weiteres, hierzu alternatives Ausführungsbeispiel ist schematisch in Fig. 6 dargestellt. Bei diesem sechsten Ausführungsbeispiel ist der Aufbau des Ständers analog zu Fig. 5 und auch die Komponenten des inneren Läufers sind ähnlich. Der Läufermantel 13 ist jedoch in diesem Beispiel direkt auf dem Läuferkern 7 angeordnet, der die Erregerwicklung 9 trägt. Um den Läufermantel 13 ist dann ein äußeres Vakuumgehäuse 57 angeordnet, dass die übrigen Komponenten des Läufers 5 radial umschließt und den Läufer nach außen begrenzt. Auch hier ist das Vakuumgehäuse 57 mit mechanisch festen Verbindungsteilen 51 mit der Rotorwelle 45 verbunden, so dass der Vakuumbehälter synchron mit den übrigen Teilen des Läufers 5 rotiert. Durch das Vakuum V im Inneren des Behälters 57 sind die innenliegenden Komponenten thermisch von der Umgebung isoliert. Im Unterschied zu Fig. 5 befindet sich der Läufermantel 13 hier im inneren Bereich des Vakuumbehälters und wird zusammen mit dem Läuferkern 7 und den Erregerwicklungen 9 auf ein kaltes Temperaturniveau gekühlt. In diesem Beispiel ist der weichmagnetische Teil des Läufermantels aus kaltzähem magnetischen Stahl ausgebildet. Beiden Beispielen in Fig. 5 und Fig. 6 ist gemeinsam, dass ein großer Teil des Abstandes zwischen der Innenfläche des Ständers und der Außenfläche des inneren Läufers zumindest im Bereich der magnetischen Pole durch weichmagnetisches Material des Läufermantels 13 aufgefüllt ist. Hierbei ist zu betonen, dass die Größenverhältnisse in den Figuren 5 und 6 nicht maßstabsgetreu sind. Vielmehr werden bei realen elektrischen Maschinen 1 die Spalte 35 und 37 vorteilhaft wesentlich dünner ausfallen als die Nenndicke 15 des Läufermantels 13.

## Patentansprüche

1. Elektrische Maschine (1) mit einem Ständer (3) und einem um eine Rotationsachse (11) drehbar gelagerten Läufer (5),
- wobei der Läufer (5) einen innenliegenden Läuferkern (7) aufweist, der mit wenigstens einer elektrischen Spulenwicklung (9) versehen ist,
- und wobei der Läuferkern (7) und die Spulenwicklung (9) radial von einem äußeren Läufermantel (13) umhüllt sind, der zumindest zu mehrheitlichen Teilen seines Umfangs aus einem weichmagnetischen Material gebildet ist und die Grundform eines kreizylindrischen beidzeitig offenen Hohlkörpers aufweist
- **dadurch gekennzeichnet, dass** der Läufermantel (13) mit wenigstens einem Paar von diametral gegenüberliegenden Ausnehmungen (21) versehen ist und dass die Spulenwicklung (9) zur Erzeugung eines Magnetfeldes mit einer Polpaarzahl n ausgebildet ist, wobei der Läufermantel (13) wenigstens n Paare von jeweils diametral gegenüberliegenden Ausnehmungen (21) aufweist, und wobei diese Ausnehmungen (21) in Umlaufrichtung jeweils zwischen benachbart liegenden Polen angeordnet sind.

2. Elektrische Maschine (1) nach Anspruch 1, bei der der Läufermantel (13) zumindest zu mehrheitlichen Teilen seines Umfangs eine Dicke (15) von wenigstens 1 cm aufweist.

3. Elektrische Maschine (1) nach einem der Ansprüche 1 oder 2, wobei der äußere Durchmesser (17) des Hohlkörpers um wenigstens 10 % größer ist als der innere Durchmesser (19) des Hohlkörpers.

4. Elektrische Maschine (1) nach einem der vorhergehenden Ansprüche, wobei die elektrische Spulenwicklung (9) des Läufers (5) als supraleitende Spulenwicklung ausgebildet ist.

5. Elektrische Maschine (1) nach einem der vorhergehenden Ansprüche, bei der das weichmagnetische Material des Läufermantels (13) eine magnetische Permeabilität von wenigstens 30 aufweist.

6. Elektrische Maschine (1) nach einem der vorhergehenden Ansprüche, bei der die Ausnehmungen (21) als Ausnehmungen im weichmagnetischen Material des Läufermantels (13) gebildet sind, wobei die Ausnehmungen (21) zumindest teilweise mit amagnetischem Material (21b) aufgefüllt sind.

7. Elektrische Maschine (1) nach einem der vorhergehenden Ansprüche, bei der der Läufermantel (13) mit zwei diametral gegenüberliegenden Anordnungen von jeweils mehreren in axialer Richtung beabstandeten Ausnehmungen (21a) versehen ist.

8. Elektrische Maschine (1) nach einem der vorhergehenden Ansprüche, bei der der Läufermantel (13) mit wenigstens zwei diametral gegenüberliegenden, jeweils radial durchgehenden Unterbrechungen (21a) versehen ist.

9. Elektrische Maschine (1) nach einem der vorhergehenden Ansprüche, bei der zwischen dem Läuferkern (7) mit der elektrischen Spulenwicklung (9) und dem Läufermantel (13) ein innerer Spalt (35) angeordnet ist.

10. Elektrische Maschine (1) nach einem der vorhergehenden Ansprüche, bei der der Läufermantel (13) den Läuferkern (7) mit der elektrischen Spulenwicklung (9) vakuumdicht umschließt.

11. Elektrische Maschine (1) nach einem der vorhergehenden Ansprüche, bei der zwischen dem Läuferkern (7) mit der elektrischen Spulenwicklung (9) und dem Läufermantel (13) ein innerer Vakuumbehälter (49) angeordnet ist, der den Läuferkern (7) mit der elektrischen Spulenwicklung (9) vakuumdicht umschließt.

12. Elektrische Maschine (1) nach einem der vorhergehenden Ansprüche, bei der der Läufermantel (13) von einem äußeren Vakuumbehälter (57) umschlossen ist.

13. Elektrische Maschine (1) nach einem der vorhergehenden Ansprüche, bei der die elektrische Spulenwicklung (9) mit wenigstens einer Halteschlaufe aus einem thermisch schlecht leitenden Material gegen den Läuferkern (7) abgestützt ist.

## Claims

1. Electric machine (1) with a stator (3) and a rotor (5) that is rotatably mounted about an axis of rotation (11),
- wherein the rotor (5) has an internal rotor core (7) which is provided with at least one electric coil winding (7),
- and wherein the rotor core (7) and the core winding (9) are radially enclosed by an external rotor casing (13), at least the greater part of the circumference of which is composed of a soft magnetic material and which assumes the basic form of a regular cylindrical hollow body open on both sides, **characterized in that** the rotor casing (13) is provided with at least one pair of diametrically opposing recesses (21) and **in that** the coil winding (9) for the generation of a magnetic field is configured with a pole pair number n, wherein the rotor casing (13) has at least n pairs of respectively diametrically opposing recesses (21), and wherein said recesses (21) in the circumferential direction are each arranged between adjoining poles.

2. Electric machine (1) according to Claim 1, wherein the rotor casing (13), at least over the greater part of its circumference, has a thickness (15) of at least 1 cm.

3. Electric machine (1) according to one of Claims 1 or 2, wherein the external diameter (17) of the hollow body is at least 10% greater than the internal diameter (19) of the hollow body.

4. Electric machine (1) according to one of the preceding claims, wherein Electric coil winding (9) of the rotor (5) is configured as a superconductive coil winding.

5. Electric machine (1) according to one of the preceding claims, wherein the soft magnetic material of the rotor casing (13) has a relative magnetic permeability of at least 30.

6. Electric machine (1) according to one of the preceding claims, wherein the recesses (21) are configured as recesses in the soft magnetic material of the rotor casing (13), wherein the recesses (21) are at least partially filled with a non-magnetic material (21b).

7. Electric machine (1) according to one of the preceding claims, wherein the rotor casing (13) is provided with two diametrically opposing arrangements, each comprised of a plurality of axially spaced recesses (21a).

8. Electric machine (1) according to one of the preceding claims, wherein the rotor casing (13) is provided with at least two diametrically opposing, and respectively radially continuous interruptions (21a).

9. Electric machine (1) according to one of the preceding claims, wherein an inner gap (35) is arranged between the rotor core (7), fitted with electric coil winding (9), and the rotor casing (13).

10. Electric machine (1) according to one of the preceding claims, wherein the rotor casing (13) encloses the rotor core (7) and electric coil winding (9) in a vacuum-tight manner.

11. Electric machine (1) according to one of the preceding claims, wherein an inner vacuum chamber (49) is arranged between the rotor (7) with the electric coil winding (9) and the rotor casing (13), which encloses the rotor core (7) and the electric coil winding (9) in a vacuum-tight manner.

12. Electric machine (1) according to one of the preceding claims, wherein the rotor casing (13) is enclosed by an outer vacuum chamber (57).

13. Electric machine (1) according to one of the preceding claims, wherein electric coil winding (9) is secured on the rotor core (7) by at least one fixing strap of a poor thermally-conductive material.

## Revendications

1. Moteur (1) électrique, comprenant un stator (3) et un rotor (5) monté tournant autour d'un axe (11) de rotation,
- dans lequel le rotor (5) a un noyau (7), qui se trouve à l'intérieur et qui est pourvu d'au moins un enroulement (9) de bobine électrique,
- et dans lequel le noyau (7) du rotor et l'enroulement (9) de bobine sont entourés radialement d'une enveloppe (13) extérieure de rotor, qui est, au moins pour des parties majoritaires de son pourtour, en un matériau à magnétisme doux et qui a la forme de base d'un corps creux cylindrique de section circulaire ouvert des deux côtés,
- **caractérisé en ce que** l'enveloppe (13) du rotor est pourvue d'au moins une paire d'évidements (21) opposés diamétralement et **en ce que** l'enroulement (9) de bobine est constitué pour produire un champ magnétique en ayant un nombre n pair de pôles, l'enveloppe (13) du rotor ayant au moins n paires d'évidements (21) opposés diamétralement respectivement et dans lequel ces évidements (21) sont disposés dans la direction du pourtour respectivement entre des pôles voisins.

2. Moteur (1) électrique suivant la revendication 1, dans lequel l'enveloppe (13) du rotor a, au moins pour des parties majoritaires de son pourtour, une épaisseur (15) d'au moins 1 cm.

3. Moteur (1) électrique suivant l'une des revendications 1 ou 2, dans lequel le diamètre (17) extérieur du corps creux est plus grand d'au moins 10% que le diamètre (19) intérieur du corps creux.

4. Moteur (1) électrique suivant l'une des revendications précédentes, dans lequel l'enroulement (9) de bobine électrique du rotor (5) est constitué en enroulement de bobine supraconducteur.

5. Moteur (1) électrique suivant l'une des revendications précédentes, dans lequel le matériau à magnétisme doux de l'enveloppe (13) du rotor a une perméabilité magnétique d'au moins 30.

6. Moteur (1) électrique suivant l'une des revendications précédentes, dans lequel les évidements (21) sont constitués sous la forme d'évidements dans le matériau à magnétisme doux de l'enveloppe (13) du rotor, les évidements (21) étant remplis, au moins en partie, d'un matériau (21b) amagnétique.

7. Moteur (1) électrique suivant l'une des revendications précédentes, dans lequel l'enveloppe (13) du rotor est pourvue de deux agencements opposés diamétralement de respectivement plusieurs évidements (21a) à distance dans la direction axiale.

8. Moteur (1) électrique suivant l'une des revendications précédentes, dans lequel l'enveloppe (13) du rotor est pourvue d'au moins deux interruptions (21a) opposées diamétralement et respectivement continues radialement.

9. Moteur (1) électrique suivant l'une des revendications précédentes, dans lequel un intervalle (35) intérieur est prévu entre le noyau (7) du rotor ayant l'enroulement (9) de bobine électrique et l'enveloppe (13) du rotor.

10. Moteur (1) électrique suivant l'une des revendications précédentes, dans lequel l'enveloppe (13) du rotor entoure d'une manière étanche au vide le noyau (7) du rotor ayant l'enroulement (9) de bobine électrique.

11. Moteur (1) électrique suivant l'une des revendications précédentes, dans lequel, entre le noyau (7) du rotor ayant l'enroulement (9) de bobine électrique et l'enveloppe (13) du rotor, est disposé un récipient (49) intérieur sous vide, qui entoure d'une manière étanche au vide le noyau (7) du rotor ayant l'enroulement (9) de bobine électrique.

12. Moteur (1) électrique suivant l'une des revendications précédentes, dans lequel l'enveloppe (13) du rotor est entourée d'un récipient (57) extérieur sous vide.

13. Moteur (1) électrique suivant l'une des revendications précédentes, dans lequel l'enroulement (9) de bobine électrique s'appuie sur le noyau (7) du rotor par au moins une boucle de maintien en un matériau mauvais conducteur de la chaleur.
